# EUROPÄISCHE PATENTSCHRIFT

(11) **EP 1 852 012 B1**
(45) Veröffentlichungstag und Bekanntmachung des Hinweises auf die Patenterteilung: **14.10.2009**
(21) Anmeldenummer: 07002916.0
(22) Anmeldetag: 12.02.2007
(51) Int. Cl.: A01G 23/00

(54) **Rückevorrichtung zum Bewegen von Baumstämmen**
Jiggle device for moving tree trunks
Dispositif de retour destiné à déplacer des troncs d'arbres

(30) Priorität: 04.05.2006 AT 3672006 U
(43) Veröffentlichungstag der Anmeldung: 07.11.2007
(73) Patentinhaber: LASCO Heutechnik GmbH, 5221 Lochen (AT)
(72) Erfinder: Landrichinger, Johann, 5221 Lochen (AT)
(74) Vertreter: Daub, Thomas

(56) Entgegenhaltungen:
- DE-A1- 3 913 499
- DE-A1-102005 009 254
- DE-C1- 10 114 824
- DE-U1- 8 512 937
- US-A- 5 564 887

## Beschreibung

### Stand der Technik

Die Erfindung geht aus von einer Rückevorrichtung zum Bewegen von Baumstämmen nach dem Oberbegriff des Anspruchs 1.

Rückevorrichtungen sind aus dem Gebiet der Forstwirtschaft bekannt. Sie weisen ein Rückeschild auf, das in einem vertikalen Schnitt quer zur Schildfläche im Allgemeinen eine Art L-Form hat, wobei der kurze Schenkel als Kufe am Boden dient und der lange Schenkel im Wesentlichen senkrecht nach oben ragt. In frontaler Ansicht sind Rückeschilder in der Regel rechteckig, wobei die beiden horizontalen Seiten im Allgemeinen länger sind als die vertikalen Seiten. Die vertikalen Seiten können als Wangen ausgebildet sein, um das Rückeschild mechanisch zu verstärken.

Mit einem Rückeschild können nach Art eines Schneepfluges meist quer liegende Stämme geschoben und in gewünschter Weise platziert werden. Zum Ziehen von Baumstämmen über eine längere Strecke werden die Baumstämme mit einem Seil oder einem Greifer mit ihrem Schnittende an das Rückeschild geschoben, das ein Eingraben des Baumstammendes in das Erdreich während des Transports verhindert. Der Greifer dient hierbei zum Positionieren der Baumstämme zum Transport und am Rückeschild. Eine derartige Vorrichtung ist beispielsweise aus der DE 10 2005 009 254 A1 oder der US 5 564 887 A bekannt.

Der Erfindung liegt die Aufgabe zu Grunde, eine universell einsetzbare und preiswerte Rückevorrichtung anzugeben. Diese Aufgabe wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Rückevorrichtung zum Bewegen von Baumstämmen mit einem Rückeschild und einem Greifer an einem Greifarm.

Es wird vorgeschlagen, dass die Rückevorrichtung ein mit dem Greifarm in einer Hubrichtung des Greifers starr befestigtes erstes Befestigungsmittel zur Befestigung an einem in einem Traktor starr gelagerten Haltemittel und ein zweites Befestigungsmittel zur Befestigung an einem Unterlenker des Traktors aufweist.

Die Erfindung geht hierbei von der Überlegung aus, dass die Rückevorrichtung neben ihrem bekannten Gebrauch zum Rücken und zum Transport von Baumstämmen durch das Vorhandensein des Greifers auch zu einem Stapeln und Aufschlichten und Aufladen von Baumstämmen auf beispielsweise einen Anhänger verwendet werden könnte. Diese Doppelnutzung bringt allerdings das Problem mit sich, dass der Greifer, der bei einem Rückevorgang in der Nähe des Waldbodens sein sollte, um die Baumstämme zuverlässig am Rückeschild zu halten, nicht besonders zum Aufschlichten der Holzstämme geeignet ist. Um beide Aufgaben mit der Rückevorrichtung zuverlässig ausführen zu können, ist es daher sinnvoll, den Greifer in einfacher Weise hoch anheben zu können.

Die Erfindung geht von der weiteren Überlegung aus, dass die Rückevorrichtung einfach gehalten bleiben kann, wenn für ein hohes Anheben ein üblicher Antrieb eines Zugfahrzeugs verwendet wird, der an üblichen landwirtschaftlichen Maschinen vorhanden ist. Ein solcher Antrieb ist durch einen üblicherweise hydraulisch bewegten Unterlenker eines Traktors gegeben. Durch eine Lagerung des zweiten Befestigungsmittels an einem Unterlenker des Traktors und die starre Lagerung des ersten Befestigungsmittels kann auf einfache und preiswerte Weise ein hohes Anheben und hierdurch eine Verwendung der Rückevorrichtung zum Schlichten von Baumstämmen erreicht werden. Durch die Anpassung der beiden Befestigungsmittel in ihrer Lage derart, dass sie an dem Haltemittel und dem Unterlenker des Traktors befestigt werden können, kann die Rückevorrichtung an eine sehr große Zahl landwirtschaftlicher Zugfahrzeuge, wie beispielsweise ein Traktor, befestigt und von diesen geführt werden. Es können die Arbeitsgänge des Rückens und des Stapelns vom Baumstämmen zügig hintereinander ausgeführt werden.

Zweckmäßigerweise sind die beiden Befestigungsmittel beweglich zueinander angeordnet, wodurch auf das Vorsehen von Adaptern oder beweglichen Zwischenteilen am Traktor verzichtet werden kann. Die beiden Befestigungsmittel sind hierbei während des Betriebs beweglich zueinander angeordnet und im Abstand zueinander veränderbar. Das zweite Befestigungsmittel ist vorteilhafterweise starr mit dem Rückeschild verbunden, wodurch die Rückevorrichtung besonders einfach und robust ausgeführt sein kann. Eine einfache Hubmechanik kann erreicht werden, wenn das Rückeschild in einer Hubrichtung des Greifers beweglich zum Greifarm angeordnet ist. Das Rückeschild, das zweckmäßigerweise ebenfalls am Greifarm befestigt ist, umfasst vorteilhafterweise eine Metallplatte, die an den Erdboden gebracht werden kann und mit der Baumstämme in eine gewünschte Richtung geschoben werden können.

Ebenfalls besonders einfach und robust kann die Rückevorrichtung ausgeführt werden, wenn das zweite Befestigungsmittel an einem Hubmittel angeordnet ist, das um eine horizontale Achse schwenkbar zum Greifarm gelagert ist. Insbesondere ist das Hubmittel um die horizontale Achse schwenkbar am Greifarm gelagert. Ist die Achse im Greifarm angeordnet, kann eine stabile Lagerung besonders einfach erreicht werden. Das Hubmittel ist insbesondere zum Anheben des Greifarms vorgesehen. Zweckmäßigerweise ist das Hubmittel starr mit dem Rückeschild verbunden, wodurch eine einfache, kostengünstige und stabile Konstruktion erreicht werden kann. Es ist auch möglich, dass das Rückeschild ein Teil des Hubmittels ist.

Ein hohes Anheben des Greifers verbunden mit einer einfachen Konstruktion kann erreicht werden, wenn die Verbindung vom ersten Befestigungsmittel bis zur Greiferbefestigung in Hubrichtung starr ist.

In einer weiteren Ausführungsvariante der Erfindung umfasst die Rückevorrichtung ein Drehelement zum seitlichen Verschwenken zumindest eines Teils des Greifarms. Ein Aktionsradius des Greifarms kann erhöht und ein Stapeln erleichtert werden. Das Verschwenken kann relativ zum ersten und/oder zweiten Befestigungsmittel bzw. zum Traktor geschehen. Weist das Drehelement zumindest zwei angewinkelt am Greifarm angreifende Schwenkantriebe zum seitlichen Verschwenken des Teils des Greifarms auf, kann ein weiter Schwenkbereich des Greifarms erreicht werden, ohne dass beide Schwenkantriebe in einen Totpunkt kommen. Die Anwinkelung ist zweckmäßigerweise zwischen 10° und 170°.

Es wird außerdem vorgeschlagen, dass der Greifer mit einer Greiferbefestigung an einem Greifarm befestigt ist und die Greiferbefestigung aus einem Fahrstand des Traktors lösbar ist. Der Greifer kann für einen Rückevorgang in der Nähe des Rückeschilds sein, um die Baumstämme zuverlässig am Rückeschild zu halten, und zum Aufschlichten der Holzstämme weit weg vom Zugfahrzeug sein, um besonders hoch angehoben werden zu können und die Baumstämme sehr hoch aufschlichten zu können. Durch eine aus dem Fahrstand des Zugfahrzeugs lösbare Greiferbefestigung kann das Verstellen des Greifers bzw. dessen Greiferbefestigung am Greifarm schnell durchgeführt werden. Außerdem kann eine Unfallgefahr herabgesetzt werden. Hierbei kann zumindest ein zusätzliches Bedienmittel im Fahrstand vorgesehen sein und/oder es kann vorteilhaft zumindest ein bereits vorhandenes Bedienmittel hierzu genutzt werden. Das Bedienmittel kann von einem im Fahrstand angeordneten Hebel, Kippschalter, Druckknopf und/oder einem sonstigen, dem Fachmann als sinnvoll erscheinenden Mittel gebildet sein, mittels dessen manuell, pneumatisch, hydraulisch, elektromagnetisch und/oder elektromotorisch ein Lösevorgang zumindest einleitbar ist.

Die Greiferbefestigung ist zweckmäßigerweise zu einer Verstellung relativ zu zumindest eines Teils des Greifarms lösbar. Zweckmäßigerweise ist die Greiferbefestigung aus dem Fahrstand auch wieder befestigbar, so dass der Bediener auch für diese Arbeite nicht den Fahrstand verlassen muss. Die Rückevorrichtung kann einfach gehalten bleiben, wenn ein Lösen und Schließen der Greiferbefestigung ohne einen maschinellen Antrieb auskommt. Die Greiferbefestigung ist vorteilhafterweise eine lösungsantriebsfreie Greiferbefestigung mit einem manuellen Lösemittel, z.B. einem von einem Bediener aus dem Fahrstand von Hand bewegbaren Lösemittel zum Lösen der Greiferbefestigung.

In einer vorteilhaften Ausgestaltung der Erfindung ist die Greiferbefestigung durch eine Bewegung des Greifarms lösbar, wodurch ein bereits vorhandenes Bedienmittel, wie insbesondere ein Hebel, zum Lösen genutzt werden kann. Es kann auf einen separaten Antrieb zur Lösung der Greiferbefestigung verzichtet und die Lösung dennoch maschinell mit dem für die Bewegung des Greifarms zuständigen Antrieb durchgeführt werden.

Vorteilhafterweise ist die Greiferbefestigung zu einer Verstellung relativ zu zumindest einem Teil des Greifarms durch eine Fahrbewegung des Zugfahrzeugs vorgesehen. Der Greifarm kann beispielsweise in Richtung zum Rückeschild oder von diesem weg bewegt werden, ohne dass dazu ein separater Antrieb notwendig wäre. Besonders einfach kann die Verstellung durchgeführt werden, wenn der Greifer beispielsweise auf dem Erdreich abgesetzt und der Greifarm, insbesondere mitsamt des Rückeschilds durch eine Fahrbewegung des Zugfahrzeugs relativ zur Greiferbefestigung und relativ zum Greifer bewegt wird. Es kann ein Fahrantrieb des Traktors zur Verstellung genutzt werden, insbesondere durch eine Fahrbewegung des Traktors relativ zum ruhenden Greifer.

Ein besonders einfaches Lösen und insbesondere Befestigen der Greiferbefestigung am Greifarm kann erreicht werden, wenn der Greifer bei gelöster Greiferbefestigung in zumindest einer Hubrichtung des Greifarms am Greifarm befestigt bleibt. Bei einem Lösen der Greiferbefestigung wird der Greifer somit nicht vollständig vom Greifarm getrennt, sondern bleibt mit dem Greifarm verbunden und kann beispielsweise entlang des Greifarms hin und her geschoben werden. Auf ein passgenaues Positionieren der Greiferbefestigung am Greifarm in drei Dimensionen zur Befestigung des Greifers kann verzichtet werden.

Es wird außerdem vorgeschlagen, dass die Rückevorrichtung ein Verstellmittel aufweist, das eine Verstellung der Greiferbefestigung in einem betriebsbereiten Zustand der Greiferbefestigung erlaubt. Hierdurch kann besonders einfach eine Verstellung während eines Arbeitsgangs ohne eine wesentliche Unterbrechung des Arbeitsgangs erreicht werden. Die Verstellung kann insbesondere ohne vollständiges Lösen der Greiferbefestigung vom Greifarm erfolgen und die Greiferbefestigung kann im am Greifarm befestigten Zustand verstellt werden.

Zweckmäßigerweise umfasst die Greiferbefestigung zumindest zwei Elemente, die in einem relativ zueinander unbelasteten Zustand zueinander beweglich sind und die bei einer Belastung zueinander arretieren. Auf diese Weise kann ein Lösen und Verriegeln der Greiferbefestigung besonders einfach und schnell durchgeführt werden, in dem die beiden Elemente zueinander entlastet bzw. belastet werden.

Mit gleichem Vorteil ist die Greiferbefestigung zweckmäßigerweise durch die Schwerkraft arretiert und durch eine Kraft auf die Greiferbefestigung entgegen der Schwerkraft lösbar. So kann die Greiferbefestigung beispielsweise durch ein übliches Hängen des Greifers am Greifarm arretiert sein, so dass eine Verstellung der Greiferbefestigung verhindert wird. Bei einem Absetzen des Greifers auf den Boden wirkt eine Kraft von der Erde entgegen der Schwerkraft auf den Greifer und kann diesen relativ zum Greifarm anheben, wenn der Greifarm genügend abgesenkt wird, wodurch die Greiferbefestigung besonders einfach lösbar ist.

Weist die Rückevorrichtung ein Arretiermittel mit einem Formschlusselement zur formschlüssigen Arretierung der Greiferbefestigung zu zumindest einem Teil des Greifarms auf, kann der Greifer auf einfache Weise besonders fest mit dem Greifarm verbunden werden. Ein sicheres Befestigen kann hierbei durch ein Rastmittel des Formschlusselements unterstützt werden, mit Hilfe dessen eine Verriegelung der Greiferbefestigung erreicht wird. Das Rastmittel kann mit Hilfe einer oder mehrerer Federn und/oder durch Einbeziehung der Schwerkraft wirken. Hierbei rastet zweckmäßigerweise ein den Greifer tragendes Element in ein entsprechendes Gegenstück ein. Alternativ zum Formschlusselement ist ein Reibschlusselement denkbar, das beispielsweise mit einer Klemmung für eine Befestigung sorgt.

Zur Erreichung der oben beschriebenen Vorteile ist die Erfindung außerdem auf ein System mit einem Traktor gerichtet und einer wie oben beschriebenen Rückevorrichtung zum Bewegen von Holzstämmen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Rückevorrichtung an einem Traktor mit einem Greifer und einem Rückeschild,
- Fig. 2: einen Unterlenker des Traktors und ein starr am Traktor gelagertes Haltemittel, an denen die Rückevorrichtung befestigt ist,
- Fig. 3: die Rückevorrichtung aus Fig. 1 in einer angehobenen Position,
- Fig. 4: die Rückevorrichtung abgesenkt zum Verstellen des Greifers,
- Fig. 5: ein Detail aus Fig. 4 mit verstelltem Greifer,
- Fig. 6: der Greifer in neu befestigter Position,
- Fig. 7: eine Rückevorrichtung mit einer anderen Greiferbefestigung,
- Fig. 8: die Rückevorrichtung aus Fig. 7 mit gelöstem Greifer,
- Fig. 9: eine weitere Rückevorrichtung mit einem teleskopisch ausfahrbaren Greifarm,
- Fig. 10: eine Detailansicht des Greifarms aus Fig. 9,
- Fig. 11: eine Detailansicht mit verstelltem Greifer,
- Fig. 12: eine Verzahnung einer Greiferbefestigung,
- Fig. 13: eine weitere Rückevorrichtung mit einer hydraulischen Schwenkvorrichtung zum Schwenken des Greifarms und
- Fig. 14: die hydraulische Schwenkvorrichtung von oben.

### Beschreibung der Ausführungsbeispiele

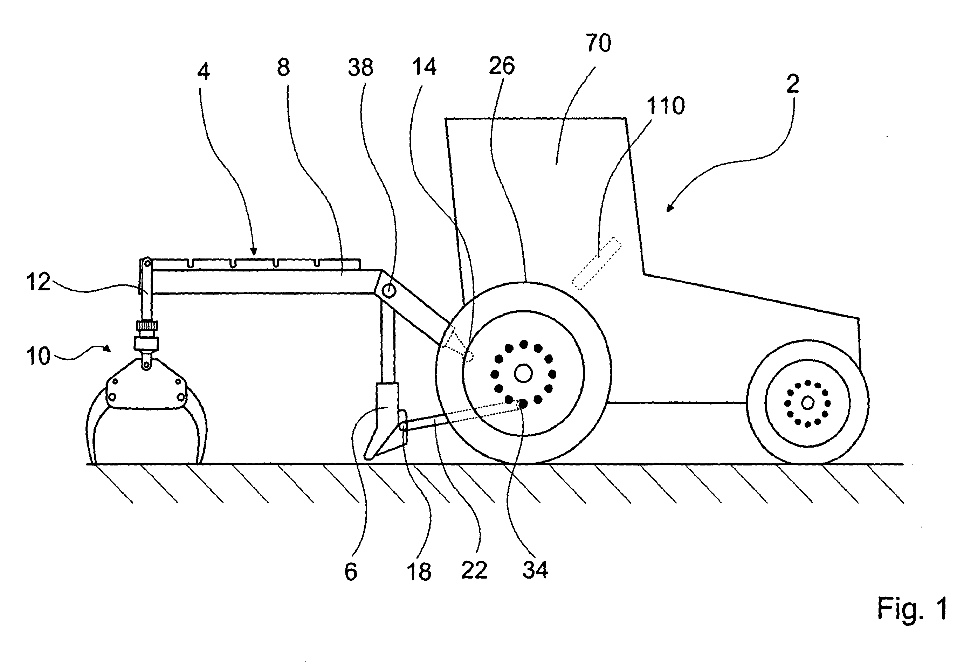

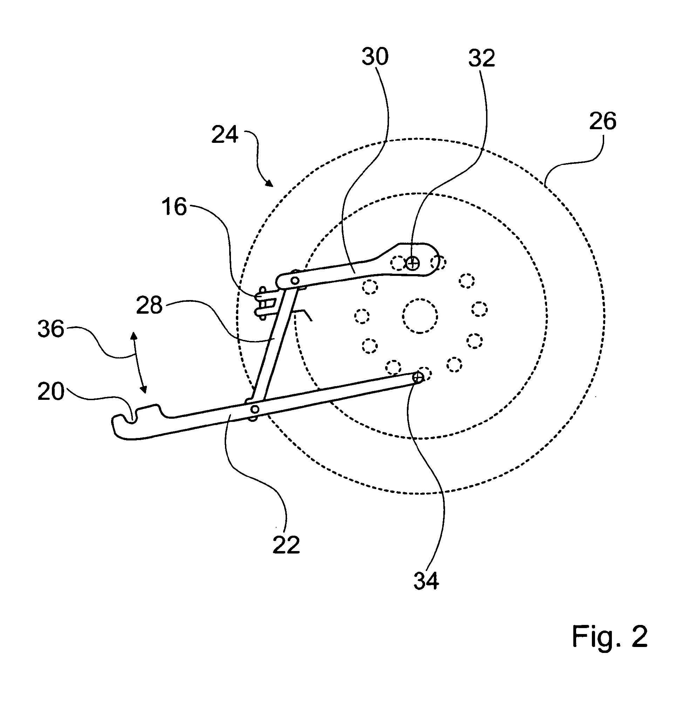

Figur 1 zeigt ein als Traktor ausgeführtes Zugfahrzeug 2, das eine Rückevorrichtung 4 mit einem Rückeschild 6 und einem Greifarm 8 aufweist, an dem ein Greifer 10 mit Hilfe einer Greiferbefestigung 12 befestigt ist. In einem Fahrstand 70 ist ein Hebel 110 zur Betätigung der Rückevorrichtung 4 vorgesehen. Der Greifarm 8 weist ein Befestigungsmittel 14 auf, das in einem in Figur 2 gezeigten und als Kupplung ausgeführten Haltemittel 16 des Traktors befestigt ist. Das Befestigungsmittel 14 ist somit starr im Zugfahrzeug 2 gelagert. Ein zweites Befestigungsmittel 18 ist starr mit dem Rückeschild 6 verbunden und umfasst einen Bolzen, der in einer Ausnehmung 20 eines Unterlenkers 22 des Zugfahrzeugs 2 gelagert ist. Mit nicht gezeigten Arretiermitteln ist der Bolzen drehbar mit dem Unterlenker 22 befestigt. Die beiden Befestigungsmittel 14, 18 sind Teil einer Befestigungseinrichtung der Rückevorrichtung 4 zur Befestigung am Zugfahrzeug 2.

Eine an landwirtschaftlichen Zugfahrzeugen bzw. Traktoren übliche Befestigungsvorrichtung 24 zur Befestigung von landwirtschaftlichem Gerät, wie beispielsweise einem Pflug, ist in Figur 2 in einer schematischen Weise dargestellt. Gestrichelt dargestellt ist eines der beiden hinteren Traktorräder 26, zwischen denen die Befestigungsvorrichtung 24 angeordnet ist. Das Haltemittel 16 ist eine am Fahrzeugrahmen starr befestigte Kupplung, wobei ebenso gut eine mit dem Fahrzeugrahmen fest fixierbare und dennoch verstellbare Kupplung denkbar wäre. Die Kupplung ist von hinten auf das Zugfahrzeug 2 gesehen mittig zwischen den Traktorrädern 26 angeordnet. Rechts und links neben dem Haltemittel 16 befinden sich zwei Unterlenker 22, von denen einer in Figur 2 gezeigt ist und die jeweils zwischen dem Haltemittel 16 und den Traktorrädern 26 angeordnet sind. Jeder dieser Unterlenker 22 ist über einen Verbindungsarm 28 mit einem Hydraulikarm 30 verbunden, der durch einen nicht dargestellten Hydraulikantrieb des Zugfahrzeugs 2 antreibbar und um eine Schwenkachse 32 drehbar gelagert ist. Bei einer Schwenkbewegung des Hydraulikarms 30 wird auch der Unterlenker 22, der um eine Schwenkachse 34 schwenkbar im Traktor befestigt ist, in Richtung eines Pfeils 36 nach oben oder nach unten bewegt, wodurch das jeweils angekoppelte landwirtschaftliche Gerät gehoben, gesenkt oder entsprechend dem Gerät anders bewegt werden kann.

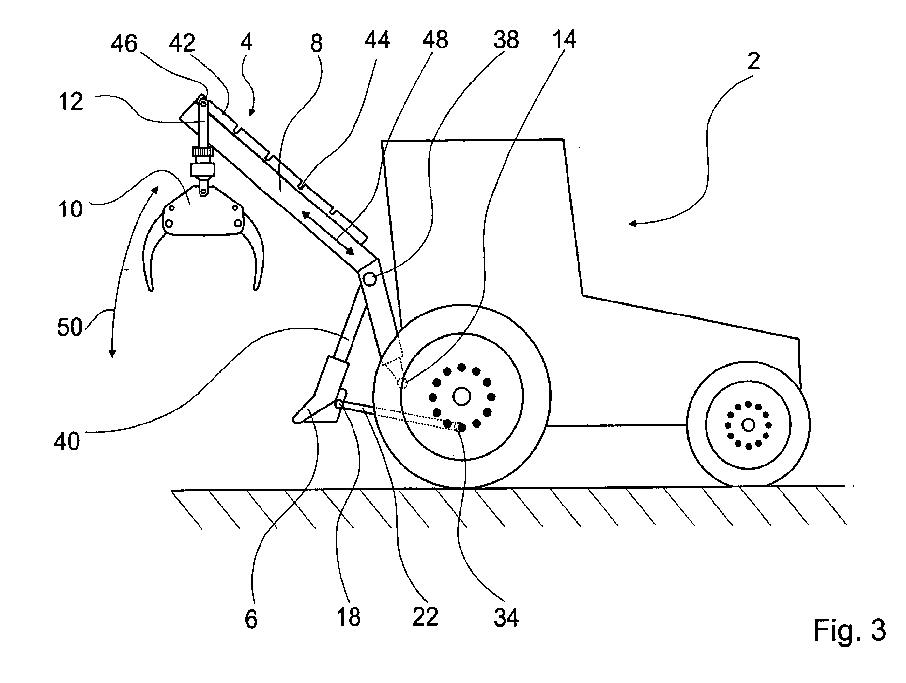

Bei einem Heben des Hydraulikarms 30 und damit des Unterlenkers 22 wird auch die Rückevorrichtung 4 in eine angehobene Position gebracht, wie beispielsweise in Figur 3 gezeigt ist. Hierbei wird das Befestigungsmittel 18 durch den Unterlenker 22 angehoben, das über das Rückeschild 6 und ein Verbindungsteil 40 in einer Schwenkachse 38 des Greifarms 8 drehbar gelagert ist. Diese Schwenkachse 38 wird durch die Bewegung des Unterlenkers 22 nach oben ebenfalls angehoben, wodurch die Greiferbefestigung 12, bedingt durch die starre Lagerung des Befestigungsmittels 14 im Haltemittel 16, in einer großen Hebebewegung ebenfalls nach oben gehoben wird. Der Greifarm 8 ist hierbei von dem Befestigungsmittel 14 bis zu einer Lagerung für die Greiferbefestigung 12 starr ausgeführt. Die beiden Befestigungsmittel 14, 18 sind jedoch beweglich zueinander, um eine Bewegung der Ausnehmung 20 des Unterlenkers 22 relativ zum Haltemittel 16 mit vollziehen zu können und um einen beweglichen Adapter zwischen dem Unterlenker 22 und dem Befestigungsmittel 14 überflüssig zu machen. Die Beweglichkeit der beiden Befestigungsmittel 14, 18 zueinander wird ermöglicht durch die Beweglichkeit des Rückeschilds 6 relativ zum Greifarm 8. Das Rückeschild 6 dient zusammen mit dem Verbindungsteil 40 als Hubmittel zum Anheben des Greifarms 8.

In der in Figur 1 gezeigten Position der Rückevorrichtung 4 können gefällte Baumstämme mit Hilfe des Rückeschilds 6 durch eine Fahrbewegung des Traktors in eine geeignete Position, beispielsweise quer zur Fahrtrichtung des Traktors, gerückt werden, um anschließend mit dem Greifer 10 gegriffen, angehoben und aufgeschlichtet zu werden, bis zu einer Höhe, die durch die Position der Rückevorrichtung 4 in Figur 3 dargestellt ist. Um eine größtmögliche Höhe des Greifers 10 zu erreichen, ist dieser in einer zum Rückeschild 6 am weitesten entfernten Halteposition am Greifarm 8 befestigt. Soll hingegen ein schwererer Baumstamm über eine größere Strecke transportiert werden, so ist der Greifarm 8 in die in Figur 1 gezeigte Position zu verfahren, mit Hilfe des Rückeschilds 6 der Baumstamm längs zur Fahrtrichtung zu drücken und mit dem Greifer 10 zu greifen, der hierfür in eine Greifrichtung quer zur Papierebene aus Figur 1 gedreht wird. Zum Drehen und Greifen des Greifers 10 umfasst die Rückevorrichtung 4 eine nicht dargestellte Hydraulikeinrichtung, die von einer Hydraulikpumpe des Zugfahrzeugs 2 gespeist wird. Nun wird der Baumstamm - durch den Greifer 10 fest am Rückeschild 6 gehalten - durch eine Fahrbewegung des Zugfahrzeugs 2 gezogen, wobei das Ende des Baumstamms am Rückeschild 6 gehalten bleibt und hierdurch ein Eingraben des Endes des Baumstamms in weichen Waldboden verhindert wird.

Um das Ende des Baumstamms möglichst gut am Rückeschild 6 führen zu können, ist der Greifer 10 möglichst nah am Rückeschild 6 anzuordnen, was beispielsweise durch ein Verstellmittel 42 geschehen kann. Das Verstellmittel 42 ist als metallisches U-Profil ausgeführt, das mit nach oben geöffneten Schenkeln auf dem Greifarm 8 beispielsweise angeschweißt ist. In das U-Profil sind Ausnehmungen 44 eingebracht, in die ein Bolzen 46 der Greiferbefestigung 12 eingelegt werden und hierdurch der Greifer 10 in Längsrichtung 48 des Greifarms 8 befestigt werden kann. Zusätzlich ist der Greifer 10 in einer Hubrichtung 50 in der Weise mit dem Greifarm 8 verbunden, dass er vom Greifarm 8 getragen wird.

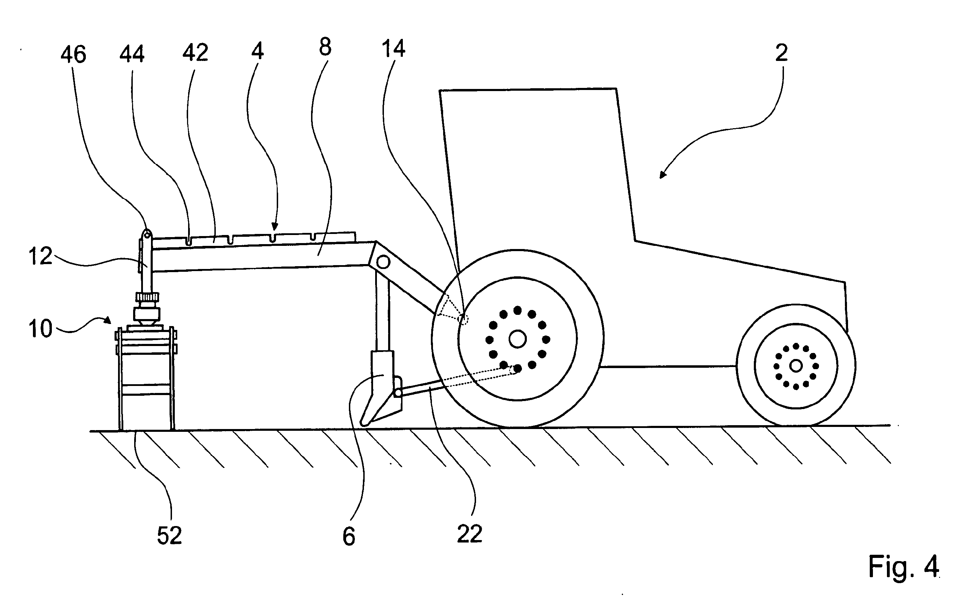

Zum teilweisen Lösen der Greiferbefestigung 12 vom Greifarm 8 kann der Greifarm 8 in eine wie in Figur 4 gezeigte Position gebracht werden. Durch das Abstellen des Greifers 10 auf einem Boden 52 wird der Greifer 10 relativ zum Greifarm 8 vom Boden 52 leicht angehoben, so dass sich der Bolzen 46 aus der Ausnehmung 44 löst. Nun kann der Greifer 10 von Hand in eine andere Ausnehmung 44 verschoben werden.

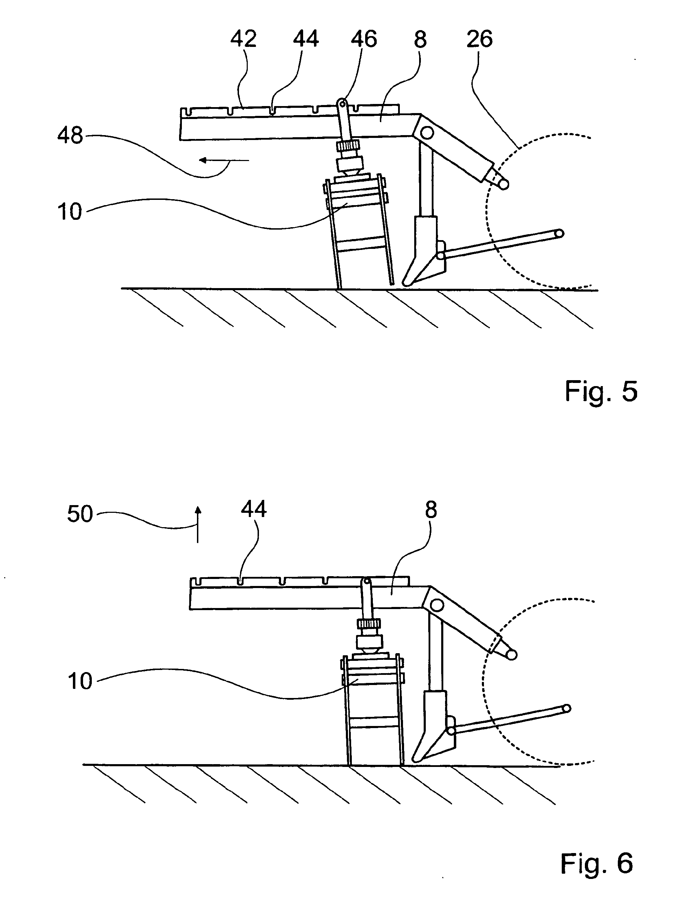

Eine einfachere und schnellere Art, den Greifer 10 zu verstellen, ohne dass ein Bediener das Zugfahrzeug 2 verlassen muss, ist in den Figuren 5 und 6 dargestellt. Nach dem Lösen der Greiferbefestigung 12 vom Verstellmittel 42 kann das in den Figuren 5 und 6 nur angedeutete Zugfahrzeug 2 nach hinten gefahren werden, parallel zur Längsrichtung 48 des Greifarms 8. Hierbei bleibt der Greifer 10 zunächst auf dem Boden 52 stehen und rutscht dann, wie in Figur 5 gezeigt, auf dem U-Profil und drückt hierbei den Greifarm 8 wegen seiner leichten Neigung etwas nach unten bis der Bolzen 46 eine Ausnehmung 44 erreicht. Dann rastet der Bolzen 46 in die Ausnehmung 44 ein, wie in Figur 6 gezeigt, wobei der Greifarm 8 etwas nach oben in Hubrichtung 50 gelangt. Nun ist der Greifer 10 nah am Rückeschild 6, so dass ein Baumstamm für ein längeres Ziehen fest am Rückeschild 6 gehalten werden kann.

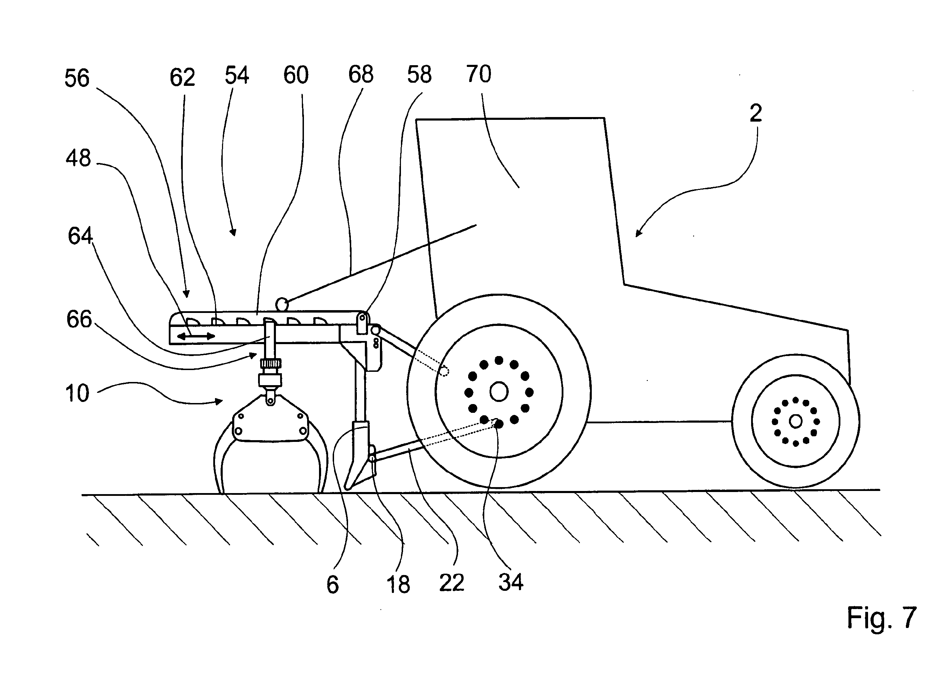

Figur 7 zeigt das Zugfahrzeug 2 mit einer anderen Rückevorrichtung 54, die sich von der Rückevorrichtung 4 durch ein anderes Verstellmittel 56 zur Verstellung des Abstands des Greifers 10 relativ zum Rückeschild 6 unterscheidet. Bezüglich gleich bleibender Merkmale und Funktionen der Rückevorrichtung 54 wird auf die Beschreibung zum Ausführungsbeispiel in den Figuren 1 bis 6 verwiesen, wobei im Wesentlichen gleich bleibende Bauteile grundsätzlich mit den gleichen Bezugszeichen beziffert sind. Die nachfolgende Beschreibung beschränkt sich im Wesentlichen auf die Unterschiede zum Ausführungsbeispiel in den Figuren 1 bis 6.

Das Verstellmittel 56, das als ein Teil einer Greiferbefestigung 66 dient, umfasst einen um eine Schwenkachse 58 schwenkbaren Bügel 60 mit Ausnehmungen 62, die ein als metallisches Band um den Greifarm 8 ausgeführtes Haltemittel 64 umgreifen und im verriegelten Zustand den Greifer 10 an einem Verschieben in Längsrichtung 48 hindern. Zum Lösen der Greiferbefestigung 66 ist ein als Zugseil ausgeführtes Öffnungsmittel 68 am Bügel 60 befestigt, das von einem Bediener im Fahrstand 70 des Zugfahrzeugs 2 bedienbar ist.

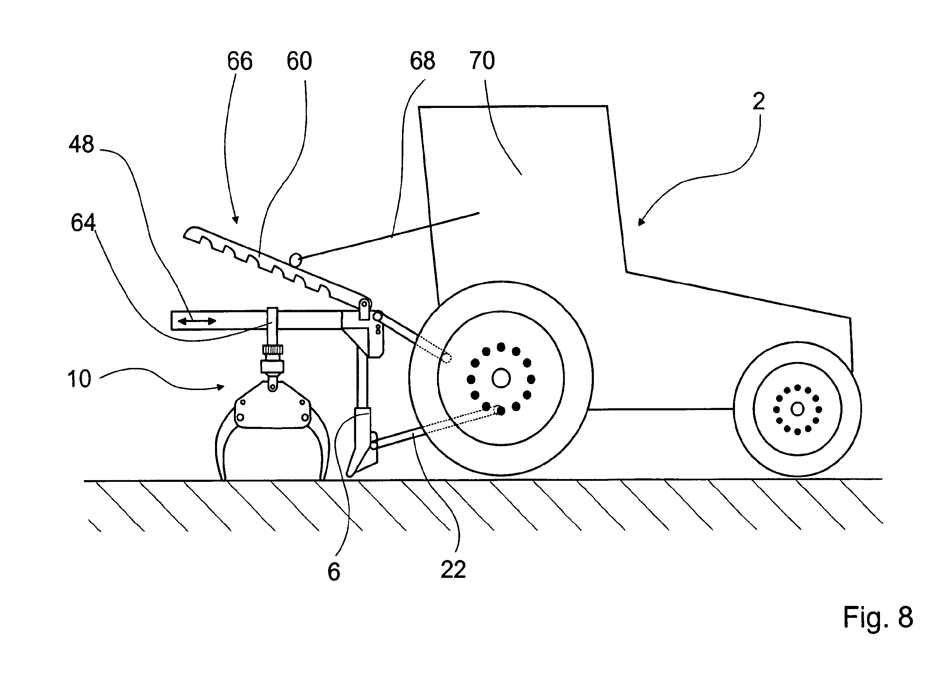

In Figur 8 ist die Greiferbefestigung 66 in geöffnetem Zustand gezeigt, in der der Greifer 10 in Längsrichtung 48 verschoben werden kann, beispielsweise durch eine Fahrbewegung des Zugfahrzeugs 2. Zum Schließen der Greiferbefestigung 66 kann der Bügel 60 auf das Haltemittel 64 aufgelegt und der Greifer 10, z.B. durch ein Fahren des Zugfahrzeugs 2, so lange in Längsrichtung 48 verschoben werden, bis das Haltemittel 64 in eine der Ausnehmungen 62 einrastet.

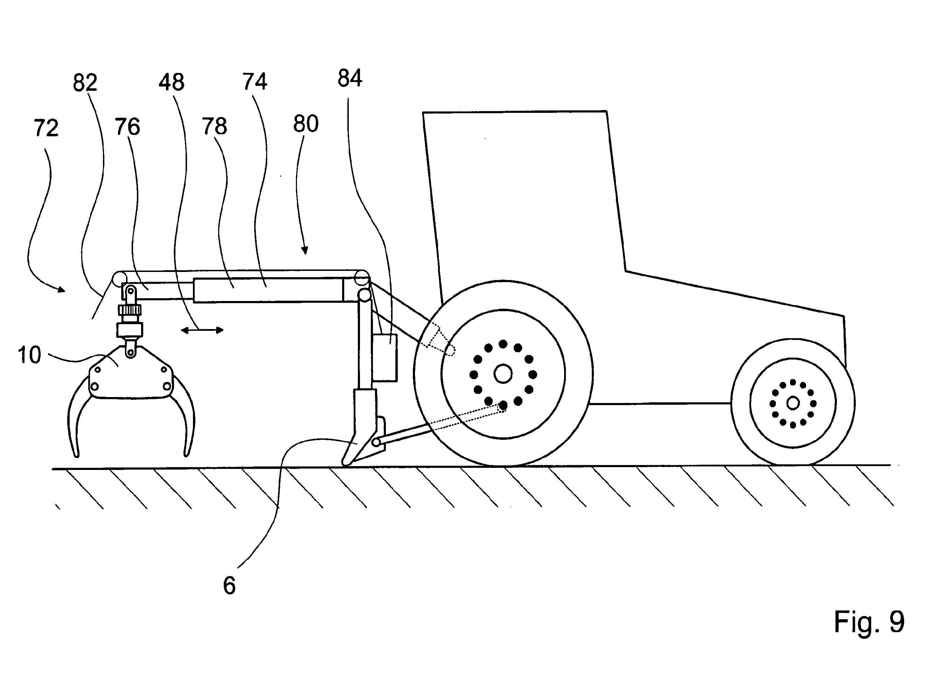

Eine weitere Rückevorrichtung 72 ist in Figur 9 dargestellt. Ein Greifarm 74 umfasst zwei Teile 76, 78, die relativ zueinander in Längsrichtung 48 teleskopartig verschiebbar sind. Zum Heranholen von weiter entfernten Baumstämmen weist der Greifarm 74 eine Seilvorrichtung 80 mit einem Seil 82 und einer motorisch betriebenen Seilwinde 84 auf.

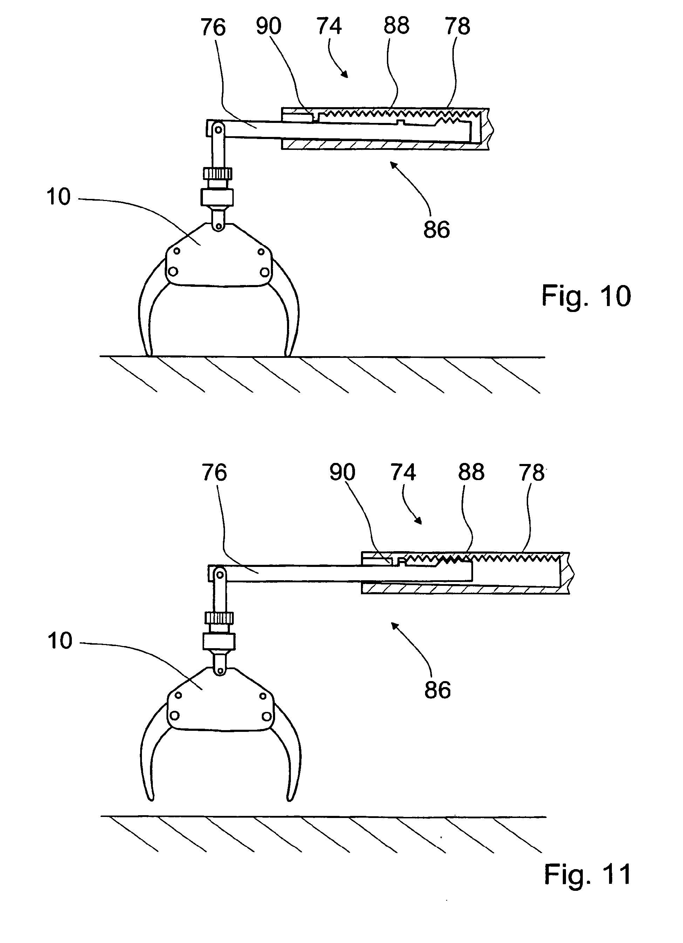

Figuren 10 und 11 zeigen den Teil 78 des Greifarms 74 in aufgebrochener Darstellung. Die beiden Teile 76, 78 bilden eine Greiferbefestigung 86, die eine Formschlussverbindung durch eine Verzahnung 88 aufweist. Figur 10 zeigt die Greiferbefestigung 86 in gelöster Stellung und Figur 11 in verriegelter Stellung. Wie bei den oben beschriebenen Ausführungsbeispielen bleibt auch hier der Greifer 10 bei gelöster Greiferbefestigung 86 in der Hubrichtung 50 am Greifarm 74 befestigt und ist jederzeit, auch während eines Verstellvorgangs, zu einem Betrieb bereit. Durch eine Bewegung des Greifarms 74 in eine der Hubrichtungen 50 kann die Greiferbefestigung 86 geöffnet bzw. verriegelt werden. Durch eine Fahrbewegung des Zugfahrzeugs 2 kann der Teil 76 relativ zum Teil 78 verschoben werden. Um ein Herausfallen des Teils 76 aus dem Teil 78 zu verhindern, weist die Greiferbefestigung 86 einen Stopp 90 aus einer Ausformung am Teil 76 und einer am Teil 78 auf. In einer weiteren Ausführungsvariante ist es möglich, anstelle der Verzahnung 88 eine Verzahnung an der Unterseite des Teils 76 und an der unteren Innenfläche des Teils 78 vorzusehen. Es wäre dann eine längere Strecke des Teils 76 nach unten hin zu verzahnen, wohingegen am Teil 78 nur wenige Zähne vorne zum Greifer 10 hin ausreichen.

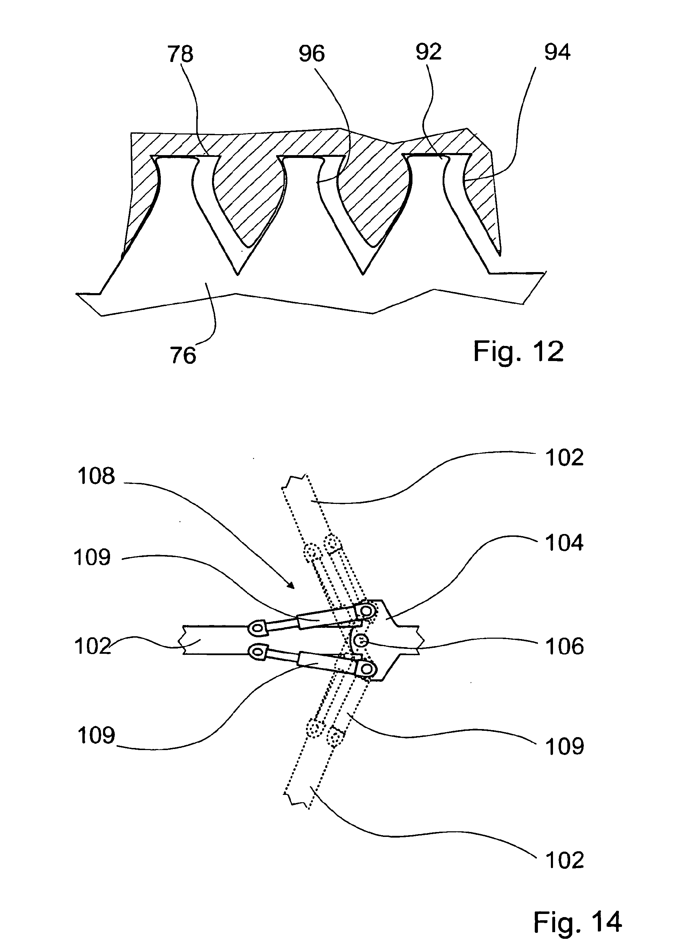

Figur 12 zeigt die Verzahnung 88 in einem Detailausschnitt. Um ein ungewolltes Verrutschen des Teils 76 relativ zum Teil 78 zu verhindern, beispielsweise bei einem Ziehen eines Baumstamms, bei dem große Kräfte in Längsrichtung 48 und nur relativ kleine Kräfte in Hubrichtung 50 auftreten, oder bei einem steil angehobenen Greifarm 74 unter großer Last, hat die Verzahnung 88 Zähne mit jeweils einer Verdickung 92 an den Zahnspitzen, die jeweils in eine entsprechend geformte Ausnehmung 94 eingreift. Es ist ausreichend, wenn die Verdickung 92 einen Abschnitt 96 mit parallelen Zahnwänden aufweist, auch ohne eine Aufweitung zum Zahnende hin.

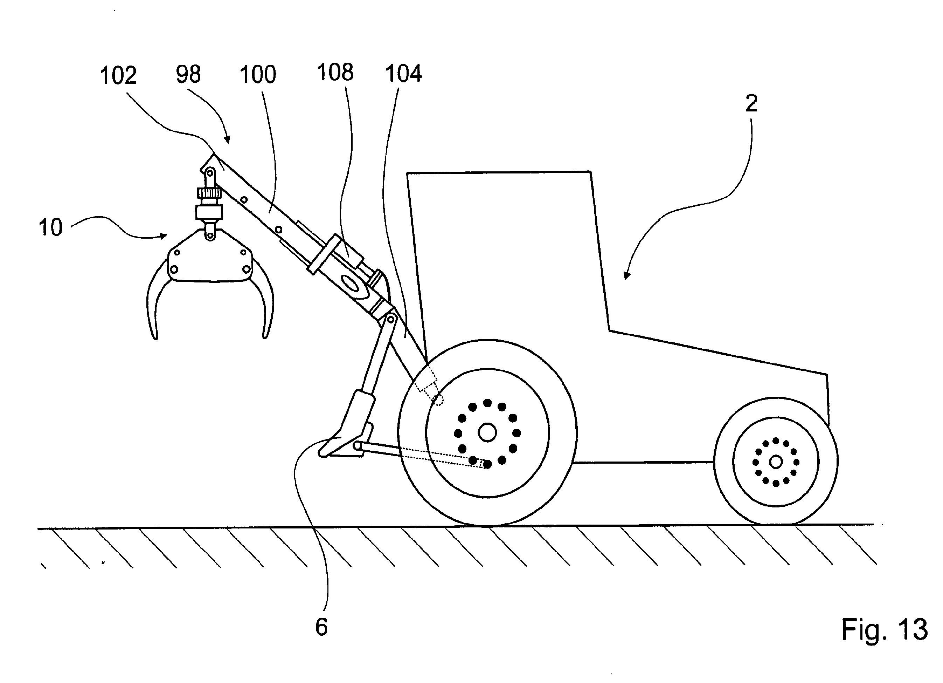

Ein horizontal schwenkbarer Greifarm 100 einer Rückevorrichtung 98 ist in den Figuren 13 und 14 gezeigt. Er umfasst zwei Teile 102, 104, die um eine Schwenkachse 106 motorisch mit Hilfe eines Drehelements 108, das zwei Hydraulikzylinder 109 aufweist, zueinander verschwenkbar sind. In Figur 14 ist die in Figur 13 dargestellte mittige Position des Teils 102 durchgezogen dargestellt und zwei seitlich verschwenkte Positionen sind gestrichelt gezeigt. Die Hydraulikzylinder 109 sind angewinkelt, also nicht parallel, sondern in einem Winkel von 20° zueinander angeordnet, wodurch ein weiter Schwenkbereich des Teils 102 erreicht werden kann, ohne dass beide Zylinder in einen Totpunkt kommen.

Die Rückevorrichtung 98 kann mit allen oben erläuterten Verstellmitteln 42 und Greiferbefestigungen 12, 66, 86 ausgeführt sein. Ebenso können die oben beschriebenen Ausführungsbeispiele mit dem Drehelement 108 ausgeführt sein.

### Bezugszeichen

- 2: Zugfahrzeug
- 4: Rückevorrichtung
- 6: Rückeschild
- 8: Greifarm
- 10: Greifer
- 12: Greiferbefestigung
- 14: Befestigungsmittel
- 16: Haltemittel
- 18: Befestigungsmittel
- 20: Ausnehmung
- 22: Unterlenker
- 24: Befestigungsvorrichtung
- 26: Traktorrad
- 28: Verbindungsarm
- 30: Hydraulikarm
- 32: Schwenkachse
- 34: Schwenkachse
- 36: Pfeil
- 38: Schwenkachse
- 40: Verbindungsteil
- 42: Verstellmittel
- 44: Ausnehmung
- 46: Bolzen
- 48: Längsrichtung
- 50: Hubrichtung
- 52: Boden
- 54: Rückevorrichtung
- 56: Verstellmittel
- 58: Schwenkachse
- 60: Bügel
- 62: Ausnehmung
- 64: Haltemittel
- 66: Greiferbefestigung
- 68: Öffnungsmittel
- 70: Fahrstand
- 72: Rückevorrichtung
- 74: Greifarm
- 76: Teil
- 78: Teil
- 80: Seilvorrichtung
- 82: Seil
- 84: Seilwinde
- 86: Greiferbefestigung
- 88: Verzahnung
- 90: Stopp
- 92: Verdickung
- 94: Ausnehmung
- 96: Abschnitt
- 98: Rückevorrichtung
- 100: Greifarm
- 102: Teil
- 104: Teil
- 106: Schwenkachse
- 108: Drehelement
- 109: Hydraulikzylinder
- 110: Hebel

## Patentansprüche

1. Rückevorrichtung (4, 54, 72, 98) zum Bewegen von Baumstämmen mit einem Rückeschild (6) und einem Greifer (10) an einem Greifarm (8, 74, 100),
**gekennzeichnet durch** ein mit dem Greifarm (8, 74, 100) in einer Hubrichtung (50) des Greifers (10) starr befestigtes erstes Befestigungsmittel (14) zur Befestigung an einem in einem Traktor starr gelagerten Haltemittel (16) und ein zweites Befestigungsmittel (18) zur Befestigung an einem Unterlenker (22) des Traktors.

2. Rückevorrichtung (4, 54, 72, 98) nach Anspruch 1,
**dadurch gekennzeichnet, dass** die beiden Befestigungsmittel (14, 18) beweglich zueinander angeordnet sind.

3. Rückevorrichtung (4, 54, 72, 98) nach Anspruch 1 oder 2,
**dadurch gekennzeichnet, dass** das zweite Befestigungsmittel (18) an einem Hubmittel angeordnet ist, das um eine horizontale Schwenkachse (38) schwenkbar zum Greifarm (8, 74, 100) gelagert ist.

4. Rückevorrichtung (4, 54, 72, 98) nach Anspruch 3,
**dadurch gekennzeichnet, dass** das Hubmittel das Rückeschild (6) ist.

5. Rückevorrichtung (4, 54, 72, 98) nach einem der vorhergehenden Ansprüche,
**dadurch gekennzeichnet, dass** die Verbindung vom ersten Befestigungsmittel (14) bis zu einer Greiferbefestigung (12, 66, 86) am Greifarm (8, 74, 100) in Hubrichtung starr ist.

6. Rückevorrichtung (4, 54, 72, 98) nach einem der vorhergehenden Ansprüche,
**gekennzeichnet durch** ein Drehelement (108) zum seitlichen Verschwenken zumindest eines Teils des Greifarms (8, 74, 100).

7. Rückevorrichtung (4, 54, 72, 98) nach Anspruch 6,
**gekennzeichnet durch** zumindest zwei angewinkelt am Greifarm (8, 74, 100) angreifende Schwenkantriebe zum seitlichen Verschwenken des Teils des Greifarms (8, 74, 100).

8. Rückevorrichtung (4, 54, 72, 98) nach einem der vorhergehenden Ansprüche,
**dadurch gekennzeichnet, dass** der Greifer (10) mit einer Greiferbefestigung (12, 66, 86) am Greifarm (8, 74, 100) befestigt ist und die Greiferbefestigung (12, 66, 86) aus einem Fahrstand (70) des Zugfahrzeugs (2) lösbar ist.

9. Rückevorrichtung (4, 72, 98) nach Anspruch 8,
**dadurch gekennzeichnet, dass** die Greiferbefestigung (12, 66, 86) durch eine Bewegung des Greifarms (8, 74, 100) lösbar ist.

10. Rückevorrichtung (4, 54, 72, 98) nach Anspruch 8 oder 9,
**dadurch gekennzeichnet, dass** die Greiferbefestigung (12, 66, 86) zu einer Verstellung relativ zu zumindest einem Teil (78) des Greifarms (8, 74, 100) durch eine Fahrbewegung des Zugfahrzeugs (2) vorgesehen ist.

11. Rückevorrichtung (4, 54, 72, 98) nach einem der Ansprüche 8 bis 10,
**dadurch gekennzeichnet, dass** der Greifer (10) bei gelöster Greiferbefestigung (12, 66, 86) in zumindest einer Hubrichtung (50) des Greifarms (8, 74, 100) am Greifarm (8, 74, 100) befestigt bleibt.

12. Rückevorrichtung (4, 72, 98) nach einem der Ansprüche 8 bis 11,
**dadurch gekennzeichnet, dass** die Greiferbefestigung (12, 86) zumindest zwei Elemente umfasst, die in einem relativ zueinander unbelasteten Zustand zueinander beweglich sind und die bei einer Belastung zueinander arretieren.

13. Rückevorrichtung (4, 72, 98) nach einem der Ansprüche 8 bis 12,
**dadurch gekennzeichnet, dass** die Greiferbefestigung (12, 86) durch die Schwerkraft arretiert ist und durch eine Kraft auf die Greiferbefestigung (12, 86) entgegen der Schwerkraft lösbar ist.

14. System mit einem Traktor und einer Rückevorrichtung (4, 54, 72, 98) zum Bewegen von Baumstämmen, wobei der Traktor ein starr befestigtes erstes Haltemittel (16) und ein zweites Haltemittel an einem Unterlenker (22) aufweist und die Rückevorrichtung (4, 54, 72, 98) ein Rückeschild (6) und einen Greifer (10) an einem Greifarm (8, 74, 100)umfasst,
**dadurch gekennzeichnet, dass** ein mit dem Greifarm (8, 74, 100) in einer Hubrichtung (50) des Greifers (10) starr befestigtes erstes Befestigungsmittel (14) der Rückevorrichtung (4, 54, 72, 98) am ersten Haltemittel (16) und ein zweites Befestigungsmittel (18) der Rückevorrichtung (4, 54, 72, 98) am zweiten Haltemittel befestigt ist.

## Claims

1. Move-over device (4, 54, 72, 98) for moving tree trunks with a move-over shield (6) and a gripper (10) on a gripping arm (8, 74, 100), **characterized by** a first fastening means (14) which is fastened rigidly to the gripping arm (8, 74, 100) in a lifting direction (50) of the gripper (10) and is intended for fastening to a holding means (16) mounted rigidly in a tractor, and a second fastening means (18) for fastening to a hitch lifting arm (22) of the tractor.

2. Move-over device (4, 54, 72, 98) according to Claim 1, **characterized in that** the two fastening means (14, 18) are arranged movably with respect to each other.

3. Move-over device (4, 54, 72, 98) according to Claim 1 or 2, **characterized in that** the second fastening means (18) is arranged on a lifting means which is mounted pivotably with respect to the gripping arm (8, 74, 100) about a horizontal pivoting axis (38).

4. Move-over device (4, 54, 72, 98) according to Claim 3, **characterized in that** the lifting means is the move-over shield (6).

5. Move-over device (4, 54, 72, 98) according to one of the preceding claims, **characterized in that** the connection from the first fastening means (14) to a gripper fastening (12, 66, 86) on the gripping arm (8, 74, 100) is rigid in the lifting direction.

6. Move-over device (4, 54, 72, 98) according to one of the preceding claims, **characterized by** a rotary member (108) for laterally pivoting at least a portion of the gripping arm (8, 74, 100).

7. Move-over device (4, 54, 72, 98) according to Claim 6, **characterized by** at least two pivoting drives acting in an angled manner on the gripping arm (8, 74, 100) for laterally pivoting the portion of the gripping arm (8, 74, 100).

8. Move-over device (4, 54, 72, 98) according to one of the preceding claims, **characterized in that** the gripper (10) is fastened to the gripping arm (8, 74, 100) by means of a gripper fastening (12, 66, 86) and the gripper fastening (12, 66, 86) can be released from an operator's seat (70) of the towing vehicle (2).

9. Move-over device (4, 72, 98) according to Claim 8, **characterized in that** the gripper fastening (12, 66, 86) can be released by movement of the gripping arm (8, 74, 100).

10. Move-over device (4, 54, 72, 98) according to Claim 8 or 9, **characterized in that** the gripper fastening (12, 66, 86) is provided for an adjustment relative to at least one portion (78) of the gripping arm (8, 74, 100) by means of a driving motion of the towing vehicle (2).

11. Move-over device (4, 54, 72, 98) according to one of Claims 8 to 10, **characterized in that**, when the gripper fastening (12, 66, 86) is released, the gripper (10) remains fastened to the gripping arm (8, 74, 100) in at least one lifting direction (50) of the gripping arm (8, 74, 100).

12. Move-over device (4, 72, 98) according to one of Claims 8 to 11, **characterized in that** the gripper fastening (12, 86) comprises at least two members which are movable with respect to each other in a state in which they are unloaded relative to each other, and which lock to each other in the event of being subjected to a load.

13. Move-over device (4, 72, 98) according to one of Claims 8 to 12, **characterized in that** the gripper fastening (12, 86) is locked by gravitational force and can be released by a force being applied to the gripper fastening (12, 86) in opposite direction to the gravitational force.

14. System with a tractor and a move-over device (4, 54, 72, 98) for moving tree trunks, wherein the tractor has a rigidly fastened first holding means (16) and a second holding means on a hitch lifting arm (22), and the move-over device (4, 54, 72, 98) comprises a move-over shield (6) and a gripper (10) on a gripping arm (8, 74, 100), **characterized in that** a first fastening means (14) of the move-over device (4, 54, 72, 98), which fastening means is fastened rigidly to the gripping arm (8, 74, 100) in a lifting direction (50) of the gripper (10), is fastened to the first holding means (16), and a second fastening means (18) of the move-over device (4, 54, 72, 98) is fastened to the second holding means.

## Revendications

1. Dispositif à bouger (4, 54, 72, 98) destiné à déplacer des troncs d'arbre avec un bouclier à bouger (6) et un grappin (10) sur un bras de grappin (8, 74, 100), **caractérisé par** un premier moyen de fixation (14) solidaire du bras de grappin (8, 74, 100) dans une direction de levage (50) du grappin (10) pour la fixation à un moyen de tenue (16) solidaire d'un tracteur et un deuxième moyen de fixation (18) pour la fixation aux barres basses d'un attelage à trois points (22) du tracteur.

2. Dispositif à bouger (4, 54, 72, 98) selon la revendication 1, **caractérisé en ce que** les deux moyens de fixation (14, 18) sont mobiles l'un par rapport à l'autre.

3. Dispositif à bouger (4, 54, 72, 98) selon la revendication 1 ou 2, **caractérisé en ce que** le deuxième moyen de fixation (18) est disposé sur un moyen de levage, qui est monté de façon pivotante par rapport au bras de grappin (8, 74, 100) autour d'un axe de pivotement horizontal (38).

4. Dispositif à bouger (4, 54, 72, 98) selon la revendication 3, **caractérisé en ce que** le moyen de levage est le bouclier à bouger (6).

5. Dispositif à bouger (4, 54, 72, 98) selon l'une quelconque des revendications précédentes, **caractérisé en ce que** la liaison du premier moyen de fixation (14) jusqu'à une fixation de grappin (12, 66, 86) sur le bras de grappin (8, 74, 100) est rigide en direction de levage.

6. Dispositif à bouger (4, 54, 72, 98) selon l'une quelconque des revendications précédentes, **caractérisé par** un élément rotatif (108) pour le pivotement latéral d'au moins une partie du bras de grappin (8, 74, 100).

7. Dispositif à bouger (4, 54, 72, 98) selon la revendication 6, **caractérisé par** au moins deux entraînements de pivotement qui engagent sur le bras de grappin (8, 74, 100) de manière inclinée pour le pivotement latéral de la partie du bras de grappin (8, 74, 100).

8. Dispositif à bouger (4, 54, 72, 98) selon l'une quelconque des revendications précédentes, **caractérisé en ce que** le grappin (10) est fixé au bras de grappin (8, 74, 100), avec une fixation de grappin (12, 66, 86) et la fixation de grappin (12, 66, 86) peut être libérée depuis un poste de conduite (70) du véhicule de traction (2).

9. Dispositif à bouger (4, 72, 98) selon la revendication 8, **caractérisé en ce que** la fixation de grappin (12, 66, 86) peut être libérée par un mouvement du bras de grappin (8, 74, 100).

10. Dispositif à bouger (4, 54, 72, 98) selon la revendication 8 ou 9, **caractérisé en ce que** la fixation de grappin (12, 66, 86) est prévue pour un déplacement par rapport à au moins une partie (78) du bras de grappin (8, 74, 100) par un mouvement de rouler du véhicule de traction (2).

11. Dispositif à bouger (4, 54, 72, 98) selon l'une quelconque des revendications 8 à 10, **caractérisé en ce que** le grappin (10) reste fixé au bras de grappin (8, 74, 100) dans au moins une direction de levage (50) du bras de grappin (8, 74, 100) lorsque la fixation de grappin (12, 66, 86) est libérée.

12. Dispositif à bouger (4, 72, 98) selon l'une quelconque des revendications 8 à 11, **caractérisé en ce que** la fixation de grappin (12, 86) comprend au moins deux éléments, qui sont mobiles l'un vers l'autre dans un état non chargé l'un par rapport à l'autre et qui sont bloqués l'un par rapport à l'autre dans un état chargé.

13. Dispositif à bouger (4, 72, 98) selon l'une quelconque des revendications 8 à 12, **caractérisé en ce que** la fixation de grappin (12, 86) est bloquée par la force de gravité et peut être libérée par une force exercée sur la fixation de grappin (12, 86) en sens contraire de la force de gravité.

14. Système avec un tracteur et un dispositif à bouger (4, 54, 72, 98) destiné à déplacer des troncs d'arbre, dans lequel le tracteur présente un premier moyen de tenue (16) solidaire et un deuxième moyen de tenue sur un bras oscillant inférieur (22) et le dispositif à bouger (4, 54, 72, 98) comprend un bouclier à bouger (6) et un grappin (10) sur un bras de grappin (8, 74, 100), **caractérisé en ce qu'**un premier moyen de fixation (14) du dispositif à bouger (4, 54, 72, 98), solidaire du bras de grappin (8, 74, 100) dans une direction de levage (50) du grappin (10), est fixé au premier moyen de tenue (16) et un deuxième moyen de fixation (18) du dispositif à bouger (4, 54, 72, 98) est fixé au deuxième moyen de tenue.
